# FASCICULE DE BREVET EUROPEEN

(11) **EP 2 082 823 B1**
(45) Date de publication et mention de la délivrance du brevet: **07.08.2013**
(21) Numéro de dépôt: 09151102.2
(22) Date de dépôt: 22.01.2009
(51) Int. Cl.: B23H 9/10, F01D 5/18

(54) **Canal de refroidissement ménagé dans une paroi**
In eine Wand eingebauter Kühlkanal
Cooling channel arranged in a wall

(30) Priorité: 23.01.2008 FR 0850402
(43) Date de publication de la demande: 29.07.2009
(73) Titulaire: SNECMA, 75015 Paris (FR)
(72) Inventeur: Briere, Eric Bernard Dominique, 78800 Houilles (FR)
(74) Mandataire: Besnard, Christophe Laurent

(56) Documents cités:
- EP-A- 1 228 832
- FR-A- 2 889 089

## Description

La présente invention concerne un élément de paroi, une électrode pour former cet élément de paroi et un procédé de fabrication associé. Il peut en particulier s'agir d'une paroi d'une aube creuse de turbine de turbomachine.

Plus précisément, la présente invention concerne un élément de paroi dans lequel est ménagé au moins un canal de refroidissement, ledit élément de paroi présentant une surface intérieure et une surface extérieure susceptible d'être refroidie par des gaz frais circulant dans ledit canal, ce canal comprenant un perçage et une partie de diffusion, le perçage débouchant, d'un côté, au niveau de la surface intérieure et, de l'autre, dans la partie de diffusion en formant un orifice, la partie de diffusion s'évasant autour de cet orifice étant délimitée par une paroi de fond et une bordure latérale.

Le document FR 2 889 089 décrit un exemple d'élément de paroi du type précité appartenant à la paroi d'une aube creuse de turbine de turboréacteur d'avion. Un autre exemple connu, analogue à celui de FR 2 889 089 est représenté sur la figure 1. Dans cet exemple la géométrie de la partie de diffusion 20 est dictée par les contraintes aérodynamiques et thermiques imposées par le concepteur. Cependant, cette partie de diffusion 20 est inscrite très en profondeur dans la paroi 22. Ceci a pour effet d'amincir localement la paroi 22 et de la fragiliser du point de vue mécanique. En effet, sous des contraintes thermiques fortes et répétées, cet amincissement favorise l'apparition locale de fissures et à terme leur propagation dans toute la pièce sous forme de criques. En particulier, au niveau du perçage 23 et là où l'épaisseur E' de la paroi est la plus mince, on constate généralement l'apparition de fissures ou d'amorces de crique.

La présente invention a pour but de proposer une solution à ce problème de résistance mécanique tout en conservant une géométrie de partie de diffusion répondant aux contraintes aérodynamiques et thermiques.

Pour atteindre ce but, l'invention a pour objet un élément de paroi du type précité dans lequel ladite paroi de fond présente une première partie plane dans laquelle le perçage débouche et une deuxième partie plane située à l'avant de la première partie plane dans le sens de l'écoulement des gaz frais, lesdites première et deuxième parties planes étant inclinées dans l'épaisseur de la paroi, de telle sorte que la première partie plane est moins inclinée que la seconde partie plane. En d'autres termes, si on considère dans le plan médian de la partie de diffusion contenant l'axe de perçage, un premier angle mesuré entre la tangente à la surface extérieure, au point d'intersection entre la surface extérieure et la deuxième partie plane, et la première partie plane, et un deuxième angle mesuré entre ladite tangente et la deuxième partie plane, alors, selon l'invention, le premier angle orienté de ladite tangente vers ladite première partie plane, est algébriquement inférieur au deuxième angle orienté positif de ladite tangente vers ladite deuxième partie plane.

Notons qu'un angle orienté est un angle dont la valeur est relative, c'est-à-dire positive ou négative. Pour définir l'orientation d'un angle, il faut fixer un sens de rotation positif de référence dans un repère du plan dans lequel on souhaite mesurer cet angle. Un angle orienté positif est un angle qui présente le même sens de rotation que le sens de rotation positif de référence. Les angles qui sont orientés dans le sens opposé sont orientés négatifs.

Bien entendu, lorsqu'on mesure un angle défini par deux demi-droites, on mesure toujours l'angle saillant (ou sortant) et pas l'angle rentrant. C'est-à-dire, qu'on mesure toujours l'angle qui est inférieur à 180°.

Notons que, selon l'invention, si le deuxième angle est strictement positif, le premier angle peut-être strictement positif, strictement négatif ou nul.

L'élément de paroi de l'invention présente l'avantage d'avoir une épaisseur de paroi de fond, autour du perçage, supérieure à celle des éléments de paroi connus. Ainsi la résistance mécanique aux contraintes thermiques fortes et répétées de cette paroi de fond est accrue. Par ailleurs la géométrie globale de la partie de diffusion conserve de bonnes propriétés aérodynamiques et thermiques.

De plus, une telle géométrie de paroi de fond, permet d'atténuer les arêtes vives entre la paroi de fond et la bordure latérale. En effet, la première partie plane forme un angle moins aigu avec la bordure latérale. Les arêtes vives étant une cause secondaire de formation de fissures et d'amorces de criques, leur atténuation améliore la tenue mécanique des éléments de paroi.

L'élément de paroi selon l'invention présente également l'avantage d'un découplage relatif des géométries des deux parties planes de la paroi de fond. De la sorte, il est aisé d'adapter au mieux la géométrie de la deuxième partie plane aux contraintes aérodynamiques et thermiques imposées par le concepteur. Ainsi, grâce à l'invention, il est possible d'améliorer l'écoulement du flux de refroidissement avec une diffusion élargie sur la surface externe de la paroi. Un refroidissement amélioré participe à éviter une sollicitation thermique trop importante de l'élément de paroi, et par conséquent le risque de formation de fissures et d'amorces de criques. Cet avantage améliore également la tenue mécanique des éléments de paroi selon l'invention par rapport aux éléments de paroi connus.

Selon un mode de réalisation, les première et deuxième parties planes sont inclinées dans l'épaisseur de la paroi de telle sorte que l'angle entre la deuxième partie plane et la première partie plane, mesuré dans ledit plan médian est compris, en valeur absolue, entre 130° et 170°.

Cette plage de valeurs angulaires permet de garantir, d'une part, une épaisseur de paroi de fond suffisante permettant d'améliorer la résistance mécanique de la paroi autour dudit perçage, et, d'autre part, une géométrie de paroi de fond permettant un écoulement de fluide satisfaisant aux exigences de refroidissement de la surface externe de la paroi. Ainsi, en choisissant l'angle entre la deuxième partie plane et la première partie plane dans cette plage de valeurs angulaires, on améliore le compromis entre la résistance mécanique et la géométrie d'écoulement de la paroi de fond.

Selon un mode de réalisation, l'élément de paroi selon l'invention appartient à la paroi d'une aube creuse. Dans ce cas, on notera que cet élément de paroi peut appartenir aussi bien à la paroi d'intrados qu'à la paroi d'extrados, sa forme étant adaptée dans les deux cas. Ceci permet d'optimiser les opérations d'usinage par l'utilisation d'un même outil pour réaliser cet élément de paroi sur la face d'intrados et sur la face d'extrados de l'aube.

L'invention a également pour objet une électrode pour former une empreinte dans une paroi par électroérosion, présentant un axe principal et une portion d'extrémité libre effilée, dans laquelle ladite portion d'extrémité libre présente des premier et deuxième méplats successifs selon la direction de l'axe principal, le premier méplat étant le plus proche de l'extrémité libre de l'électrode, l'angle d'inclinaison du premier méplat par rapport à l'axe principal étant supérieur à l'angle d'inclinaison du deuxième méplat par rapport à l'axe principal.

Les angles d'inclinaison respectifs des méplats de l'électrode sont mesurés dans un plan contenant l'axe principal de l'électrode et intersectant les deux méplats.

Une telle électrode est adaptée pour former une empreinte par électroérosion permettant de réaliser la partie de diffusion de l'élément de paroi selon l'invention.

L'invention concerne également un procédé pour ménager un canal de refroidissement dans un élément de paroi selon l'invention en utilisant une électrode selon l'invention.

Enfin l'invention a également pour objet une aube creuse de turbomachine comprenant un élément de paroi tel que décrit ci-dessus et une turbomachine comprenant une telle aube.

L'invention et ses avantages seront mieux compris à la lecture de la description détaillée qui suit du mode de réalisation de l'invention représenté à titre d'exemple non limitatif. Cette description fait référence aux figures annexées, sur lesquelles :
- la figure 1 est une vue en coupe longitudinale d'un élément de paroi d'aube creuse de turbomachine de l'art antérieur,
- la figure 2 est une vue en coupe longitudinale d'un élément de paroi selon un mode de réalisation de la présente invention,
- la figure 3 est une vue de dessus en perspective de l'élément de paroi de la figure 2,
- la figure 4 est une vue latérale d'un mode de réalisation d'une électrode d'électroérosion selon l'invention,
- la figure 5 est une vue de la figure 4 suivant la flèche V,
- la figure 6 est une vue de la figure 4 suivant la flèche VI.

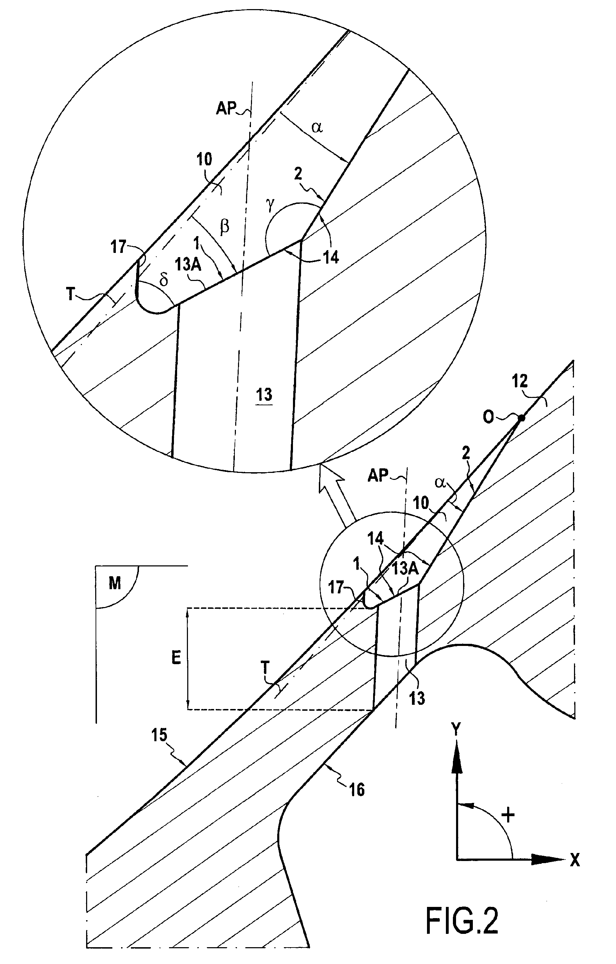

Un mode de réalisation de l'élément de paroi est décrit en référence à la figure 2. Dans cet exemple, un élément de paroi 12 dans lequel est ménagé au moins un canal de refroidissement, présente une surface intérieure 16 et une surface extérieure 15 susceptible d'être refroidie par des gaz frais circulant dans ledit canal. Ce canal comprend un perçage 13 et une partie de diffusion 10. Le perçage 13 débouche, d'un côté, au niveau de la surface intérieure 16 et, de l'autre, dans la partie de diffusion 10 en formant un orifice 13A. La partie de diffusion 10 s'évase autour de cet orifice 13A et, est délimitée par une paroi de fond 14 et une bordure latérale 17. Ladite paroi de fond 14 présente une première partie plane 1 dans laquelle le perçage 13 débouche et une deuxième partie plane 2 située à l'avant de la première partie plane 1 dans le sens de l'écoulement des gaz frais. Lesdites première et deuxième parties planes 1 et 2 sont inclinées dans l'épaisseur de la paroi 12. Ainsi, dans le plan médian M de la partie de diffusion 10 contenant l'axe de perçage AP, un premier angle β mesuré entre la tangente T à la surface extérieure 15, au point d'intersection O entre la surface extérieure 15 et la deuxième partie plane 2, et la première partie plane 1, et un deuxième angle α mesuré entre ladite tangente T et la deuxième partie plane 2, sont tels que le premier angle β orienté de ladite tangente T vers ladite première partie plane 1, est algébriquement inférieur au deuxième angle α orienté positif de ladite tangente T vers ladite deuxième partie plane 2.

Le deuxième angle α est compris entre +10° et +40°. L'angle γ entre la deuxième partie plane 2 et la première partie plane 1, mesuré dans ledit plan médian M est compris, en valeur absolue, entre 130° et 170°.

Dans le mode de réalisation représenté, ledit premier angle β est strictement négatif.

Dans un tel élément de paroi, le repère local et l'orientation des angles dans le plan médian M de la partie de diffusion 10 sont définis comme suit. Un premier axe Y du repère local est choisi parallèle à l'axe AP du perçage 13 et orienté de la surface intérieure 16 vers la surface extérieure 15. Un deuxième axe X du repère local est choisi perpendiculaire à l'axe Y orienté dans le sens de l'écoulement des gaz de refroidissement. Dans ce repère (X ; Y), les angles positifs sont orientés de l'axe X vers l'axe Y. Inversement les angles négatifs sont orientés de l'axe Y vers l'axe X.

Les ouvertures des angles α et γ définies ci-dessus présentent plusieurs avantages. Le fait de choisir le deuxième angle orienté α dans la plage d'angles positifs [+10°, +40°] assure une diffusion du flux de refroidissement optimale. En outre, le fait de choisir l'angle γ, en valeur absolue, dans la plage angulaire [130°, 170°] assure une épaisseur de matière optimale pour la paroi de fond 14, sur l'ensemble de la partie plane 1.

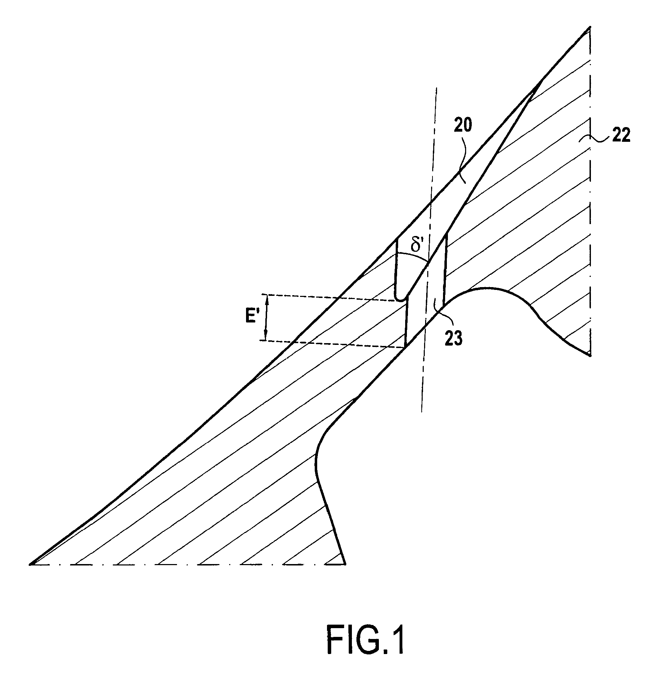

Par comparaison entre les figures 1 et 2, il apparaît clairement que l'épaisseur minimale E de la paroi de fond 14 au voisinage du perçage 13 est supérieure à l'épaisseur minimale E' de la paroi de fond des éléments de paroi de l'art antérieur.

Toujours par comparaison entre les figures 1 et 2, l'ouverture δ de l'arête entre la bordure latérale arrière 17 et la partie plane 1 est nettement plus importante que l'ouverture δ' de la même arête selon l'art antérieur (i.e. l'angle δ entre la partie plane 1 et la bordure latérale arrière 17 est moins saillant que l'angle δ').

Ces deux dernières caractéristiques assurent une meilleure résistance mécanique aux contraintes thermiques.

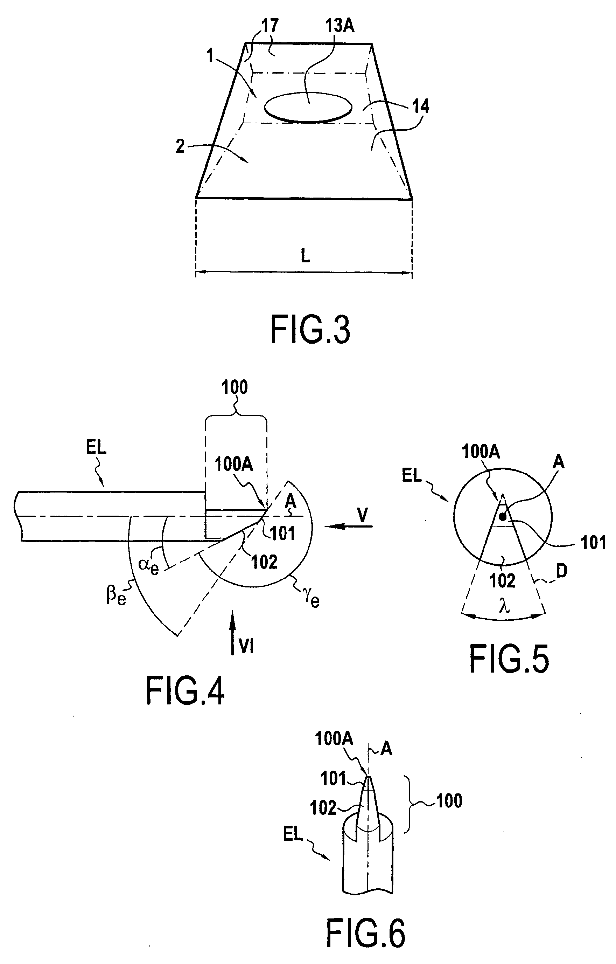

Une vue de dessus en perspective du mode de réalisation de la figure 2 est représentée sur la figure 3. Dans cette représentation, la largeur débouchante L de la deuxième partie plane 2 de la paroi de fond 14 est plus large que dans l'art antérieur pour une même épaisseur minimale de paroi de fond 14. Il en résulte une amélioration sensible de l'écoulement du flux de refroidissement avec une diffusion élargie.

Un mode de réalisation de l'électrode d'électroérosion selon l'invention est décrit en référence aux figures 4, 5 et 6. Dans cet exemple, l'électrode EL pour former une empreinte dans une paroi par électroérosion, présente un axe principal A et une portion d'extrémité libre 100 effilée. Ladite portion d'extrémité libre 100 présente des premier et deuxième méplats 101, 102 successifs selon la direction de l'axe principal A. Le premier méplat 101 est le plus proche de l'extrémité libre 100A de l'électrode EL. L'angle d'inclinaison βₑ du premier méplat 101 par rapport à l'axe principal A est supérieur à l'angle d'inclinaison αₑ du deuxième méplat 102 par rapport à l'axe principal A.

La portion d'extrémité libre 100 s'inscrit dans un dièdre D orienté selon l'axe principal A de l'électrode EL, ledit dièdre D intersectant les deux plans définis par les méplats 101 et 102.

Un dièdre est composé de deux demi-plans dont la frontière (i.e. une droite) est commune. On entend par orientation du dièdre selon l'axe principal A de l'électrode EL, le fait que la droite définissant ladite frontière est parallèle à l'axe principal A de l'électrode EL.

L'angle γₑ est l'angle mesuré entre le premier méplat 101 et le deuxième méplat 102, dans le plan de la figure 4 (ce plan contenant l'axe principal A et intersectant les méplats 101 et 102 en passant par leur axe médian). Contrairement à la remarque précédente précisant qu'on mesure toujours un angle par son côté saillant, l'angle γₑ fait exception et mesure plus de 180°. L'angle αₑ est l'angle mesuré entre le deuxième méplat 102 et l'axe principal A de l'électrode EL. L'angle βₑ est l'angle mesuré entre le premier méplat 101 et l'axe principal A de l'électrode EL. L'angle γₑ de l'électrode EL correspond à l'angle γ de l'élément de paroi 12 de la figure 2. Les angles αₑ et βₑ de l'électrode EL correspondent aux angles α et β de l'élément de paroi 12 de la figure 2 à l'inclinaison près de l'axe d'application de l'électrode sur la surface extérieure 15 de la paroi 12.

Avantageusement, l'angle αₑ est compris entre 10° et 50°. De même, l'angle γₑ est compris entre 190° et 230°. De plus, l'angle λ du dièdre D (voir figure 5) est avantageusement compris entre 20° et 80°.

Ce mode de réalisation de l'électrode est particulièrement fiable. En effet, une telle électrode permet de réaliser successivement un nombre important d'empreintes sans altération notable. Il permet également un ré-affutage aisé. C'est-à-dire qu'après une utilisation intensive et une éventuelle usure, l'embout de l'électrode tel que décrit par la présente invention peut être usiné pour pouvoir être de nouveau utilisé. De plus, cet exemple d'électrode est particulièrement adapté pour réaliser des empreintes tant sur la paroi d'intrados que sur la paroi d'extrados d'une aube. Ainsi, l'usinage complet des empreintes sur une même aube peut-être réalisé avec cette électrode.

Avantageusement, on forme ladite empreinte en orientant l'axe principal de ladite électrode parallèlement à l'axe dudit perçage. Ceci facilite le réglage des machines lors de la fabrication de l'aube.

## Revendications

1. Elément de paroi dans lequel est ménagé au moins un canal de refroidissement, ledit élément de paroi (12) présentant une surface intérieure (16) et une surface extérieure (15) susceptible d'être refroidie par des gaz frais circulant dans ledit canal, ce canal comprenant un perçage (13) et une partie de diffusion (10), le perçage (13) débouchant, d'un côté, au niveau de la surface intérieure (16) et, de l'autre, dans la partie de diffusion (10) en formant un orifice (13A), la partie de diffusion (10) s'évasant autour de cet orifice (13A) étant délimitée par une paroi de fond (14) et une bordure latérale (17), **caractérisé en ce que** ladite paroi de fond (14) présente une première partie plane (1) dans laquelle le perçage (13) débouche et une deuxième partie plane (2) située à l'avant de la première partie plane (1) dans le sens de l'écoulement des gaz frais, lesdites première et deuxième parties planes (1,2) étant inclinées dans l'épaisseur de la paroi (12), de telle sorte que, dans le plan médian (M) de la partie de diffusion (10) contenant l'axe de perçage (AP), un premier angle (β) mesuré entre la tangente (T) à la surface extérieure (15), au point d'intersection (0) entre la surface extérieure (15) et la deuxième partie plane (2), et la première partie plane (1), et un deuxième angle (α) mesuré entre ladite tangente (T) et la deuxième partie plane (2), sont tels que le premier angle (β) orienté de ladite tangente (T) vers ladite première partie plane (1), est algébriquement inférieur au deuxième angle (α) orienté positif de ladite tangente (T) vers ladite deuxième partie plane (2), et de telle sorte que l'angle (γ) entre la deuxième partie plane (2) et la première partie plane (1), mesuré dans ledit plan médian (M) est compris, en valeur absolue, entre 130° et 170°.

2. Elément de paroi selon la revendication 1, dans lequel ledit deuxième angle (α) est compris entre +10° et +40°.

3. Elément de paroi selon la revendication 1 ou 2, dans lequel ledit premier angle (β) est strictement négatif ou nul.

4. Electrode pour former une empreinte dans une paroi (12) par électroérosion, présentant un axe principal (A) et une portion d'extrémité libre (100) effilée, **caractérisée en ce que** ladite portion d'extrémité libre (100) présente des premier et deuxième méplats (101, 102) successifs selon la direction de l'axe principal (A), le premier méplat (101) étant le plus proche de l'extrémité libre (100A) de l'électrode (EL), l'angle d'inclinaison (βₑ) du premier méplat (101) par rapport à l'axe principal (A) étant supérieur à l'angle d'inclinaison (αₑ) du deuxième méplat (102) par rapport à l'axe principal (A), et l'angle (γₑ) mesuré entre le premier méplat (101) et le deuxième méplat (102), dans le plan contenant l'axe principal (A) et intersectant les méplats (101, 102) en passant par leur axe médian, étant compris entre 190° et 230°.

5. Electrode selon la revendication 4, dans laquelle ladite portion d'extrémité libre (100) s'inscrit dans un dièdre (D) orienté selon l'axe principal (A) de l'électrode (EL), ledit dièdre (D) intersectant les deux plans définis par les méplats (101, 102).

6. Procédé pour ménager un canal de refroidissement dans une paroi (12) présentant une surface intérieure (16) et une surface extérieure (15) susceptible d'être refroidie par des gaz frais circulant dans ledit canal, ce canal comprenant un perçage (13) et une partie de diffusion (10), le perçage (13) débouchant, d'un côté, au niveau de la surface intérieure (16) et, de l'autre, dans la partie de diffusion (10) en formant un orifice (13A), la partie de diffusion (10) s'évasant autour de cet orifice (13A) étant délimité par une paroi de fond (14) et une bordure latérale (17), dans lequel, selon deux étapes distinctes, on perce la paroi (12) pour réaliser ledit perçage (13) et, on forme une empreinte dans la paroi (12) pour réaliser ladite partie de diffusion (10), et dans lequel on forme ladite empreinte en utilisant une électrode d'électroérosion (EL) selon la revendication 4 ou 5.

7. Procédé selon la revendication 6 dans lequel on forme ladite empreinte en orientant l'axe principal (A) de ladite électrode (EL) parallèlement à l'axe (AP) dudit perçage (13).

8. Aube creuse de turbomachine comprenant un élément de paroi selon l'une quelconque des revendications 1 à 3.

9. Turbomachine comprenant une aube selon la revendication 8.

## Patentansprüche

1. Wandelement, in dem wenigstens ein Kühlkanal ausgebildet ist, wobei das Wandelement (12) eine Innenfläche (16) und eine Außenfläche (15), die geeignet ist, durch in dem Kanal zirkulierende Frischgase gekühlt zu werden, aufweist, wobei dieser Kanal eine Bohrung (13) und ein Diffusionsteil (10) umfaßt, wobei die Bohrung (13) auf einer Seite im Bereich der Innenfläche (16) ausmündet und auf der anderen Seite, unter Bildung einer Öffnung (13A), in das Diffusionsteil (10) mündet, wobei das Diffusionsteil (10), das um diese Öffnung (13A) herum weiter wird, durch eine bodenseitige Wand (14) und einen Seitenrand (17) begrenzt ist, **dadurch gekennzeichnet, daß** die bodenseitige Wand (14) einen ersten ebenen Teil (1), in den die Bohrung (13) mündet, sowie einen zweiten ebenen Teil (2), der in Richtung der Strömung der Frischgase an der Vorderseite des ersten ebenen Teils (1) gelegen ist, aufweist, wobei der erste und der zweite ebene Teil (1, 2) in der Dicke der Wand (12) derart geneigt sind, daß in der Mittelebene (M) des Diffusionsteils (10), welche die Bohrungsachse (AP) enthält, ein erster Winkel (β), welcher zwischen der Tangente (T) an die Außenfläche (15), an dem Schnittpunkt (O) zwischen der Außenfläche (15) und dem zweiten ebenen Teil (2), und dem ersten ebenen Teil (1) gemessen wird, sowie ein zweiter Winkel (α), welcher zwischen der Tangente (T) und dem zweiten ebenen Teil (2) gemessen wird, derart sind, daß der von der Tangente (T) in Richtung des ersten ebenen Teils (1) orientierte erste Winkel (β) algebraisch kleiner ist als der von der Tangente (T) in Richtung des zweiten ebenen Teils (2) positiv orientierte zweite Winkel (α), sowie derart, daß der Winkel (γ) zwischen dem zweiten ebenen Teil (2) und dem ersten ebenen Teil (1), welcher in der Mittelebene (M) gemessen wird, im Absolutwert zwischen 130° und 170° beträgt.

2. Wandelement nach Anspruch 1, wobei der zweite Winkel (α) zwischen +10° und +40° beträgt.

3. Wandelement nach Anspruch 1 oder 2, wobei der erste Winkel (β) strikt negativ oder null ist.

4. Elektrode zur Bildung einer Vertiefung in einer Wand (12) mittels Elektroerosion, die eine Hauptachse (A) und einen freien, spitz zulaufenden Endabschnitt (100) aufweist, **dadurch gekennzeichnet, daß** der freie Endabschnitt (100) aufeinanderfolgende erste und zweite Abflachungen (101, 102) entlang der Richtung der Hauptachse (A) aufweist, wobei die erste Abflachung (101) dem freien Ende (100A) der Elektrode (EL) am nächsten gelegen ist, wobei der Neigungswinkel (βₑ) der ersten Abflachung (101) gegenüber der Hauptachse (A) größer ist als der Neigungswinkel (αₑ) der zweiten Abflachung (102) gegenüber der Hauptachse (A), und wobei der Winkel (yₑ), der zwischen der ersten Abflachung (101) und der zweiten Abflachung (102), in der Ebene, welche die Hauptachse (A) enthält und die Abflachungen (101, 102) durch deren Mittelachse verlaufend schneidet, gemessen wird, zwischen 190° und 230° beträgt.

5. Elektrode nach Anspruch 4, wobei der freie Endabschnitt (100) sich in ein entlang der Hauptachse (A) der Elektrode (EL) ausgerichtetes Dieder (D) einfügt, wobei das Dieder (D) die durch die Abflachungen (101, 102) definierten beiden Ebenen schneidet.

6. Verfahren zur Ausbildung eines Kühlkanals in einer Wand (12), die eine Innenfläche (16) und eine Außenfläche (15), welche geeignet ist, durch in dem Kanal zirkulierende Frischgase gekühlt zu werden, aufweist, wobei dieser Kanal eine Bohrung (13) und ein Diffusionsteil (10) umfaßt, wobei die Bohrung (13) auf einer Seite im Bereich der Innenfläche (16) ausmündet und auf der anderen Seite, unter Bildung einer Öffnung (13A), in das Diffusionsteil (10), mündet, wobei das Diffusionsteil (10), das um diese Öffnung (13A) herum weiter wird, durch eine bodenseitige Wand (14) und einen Seitenrand (17) begrenzt ist, wobei in zwei getrennten Schritten die Wand (12) durchbohrt wird, um die Bohrung (13) herzustellen, und in der Wand (12) eine Vertiefung gebildet wird, um das Diffusionsteil (10) herzustellen, und wobei die Vertiefung unter Verwendung einer Elektroerosionselektrode (EL) nach Anspruch 4 oder 5 gebildet wird.

7. Verfahren nach Anspruch 6, wobei die Vertiefung ausgebildet wird, indem die Hauptachse (A) der Elektrode (EL) parallel zur Achse (AP) der Bohrung (13) ausgerichtet wird.

8. Hohle Turbomaschinenschaufel, die ein Wandelement nach einem der Ansprüche 1 bis 3 umfaßt.

9. Turbomaschine, die eine Schaufel nach Anspruch 8 umfaßt.

## Claims

1. A wall element having at least one cooling channel formed therein, said wall element (12) presenting an inside surface (16) and an outside surface (15) suitable for being cooled by cool gas flowing in said channel, the channel comprising a hole (13) and a diffusion portion (10), the hole (13) opening out at one end into the inside surface (16), and at its other end, into a diffusion portion (10) by forming an orifice (13A), the diffusion portion (10) flaring around said orifice (13A) and being defined by a bottom wall (14) and a side margin (17), the wall element being **characterized in that** said bottom wall (14) presents a first plane portion (1) into which the hole (13) opens out, and a second plane portion (2) situated at the front of the first plane portion (1) in the flow direction of the cool gas, said first and second plane portions (1, 2) being inclined in the thickness of the wall (12) in such a manner that, in the midplane (M) of the diffusion portion (10) containing the axis (AP) of the hole, a first angle (β) measured between the tangent (T) to the outside surface (15) at the point of intersection (O) between the outside surface (15) and the second plane portion (2) and the first plane portion (1), and a second angle (α) measured between said tangent (T) and the second plane portion (2) are such that the first angle (β) oriented from said tangent (T) towards said first plane portion (1) is algebraically less than the second angle (α) oriented positive from said tangent (T) towards said second plane portion (2), in such a manner that the angle (γ) between the second plane portion (2) and the first plane portion (1) as measured in said midplane (M) lies, in absolute value, in the range 130° to 170°.

2. A wall element according to claim 1, wherein said second angle (α) lies in the range +10° to +40°.

3. A wall element according to claim 1 or claim 2, wherein said first angle (β) is strictly negative or zero.

4. An electrode for forming an indentation in a wall (12) by electro-erosion, the electrode presenting a main axis (A) and a tapered free end portion (100), the electrode being **characterized in that** said free end portion (100) presents first and second flats (101, 102) in succession along the direction of the main axis (A), the first flat (101) being closer to the free end (100A) of the electrode (EL), the angle of inclination (βₑ) of the first flat (101) relative to the main axis (A) being greater than the angle of inclination (αₑ) of the second flat (102) relative to the main axis (A), and the angle (γₑ) measured between the first flat (101) and the second flat (102), in the plane containing the main axis (A) and intersecting the flats (101, 102) via their middle axes, lies in the range 190° to 230°.

5. An electrode according to claim 4, wherein said free end portion (100) is inscribed in a dihedron (D) oriented along the main axis (A) of the electrode (EL), said dihedron (D) intersecting the two planes defined by the flats (101, 102).

6. A method of providing a cooling channel in a wall (12) presenting an inside surface (16) and an outside surface (15) suitable for being cooled by cool gas flowing in said channel, the channel comprising a hole (13) and a diffusion portion (10), the hole (13) opening out at one end in the inside surface (16) and at the other end in the diffusion portion (10) where it forms an orifice (13A), the diffusion portion (10) flaring around said orifice (13A) and being defined by a bottom wall (14) and a side margin (17), wherein, in two distinct steps, the wall (12) is pierced to make said hole (13), and an indentation is formed in the wall (12) to make said diffusion portion (10), and wherein said indentation is formed by using an electro-erosion electrode (EL) according to claim 4 or claim 5.

7. A method according to claim 6, wherein said indentation is formed by orienting the main axis (A) of said electrode (EL) parallel to the axis (AP) of said hole (13).

8. A hollow turbomachine blade including a wall element according to any one of claims 1 to 3.

9. A turbomachine including a blade according to claim 8.
